# EUROPEAN PATENT SPECIFICATION

(11) **EP 3 493 343 B1**
(45) Date of publication and mention of the grant of the patent: **17.03.2021**
(21) Application number: 17204828.2
(22) Date of filing: 01.12.2017
(51) Int. Cl.: H02H 7/122, H02M 1/32, H02M 7/5387

(54) **CIRCUIT ARRANGEMENT**
SCHALTUNGSANORDNUNG
AGENCEMENT DE CIRCUIT

(43) Date of publication of application: 05.06.2019
(73) Proprietor: Infineon Technologies AG, 85579 Neubiberg (DE)
(72) Inventor: Müller, Christian Robert, 9741 Schweinfurt (DE); Domes, Daniel, 59602 Rüthen (DE); Slawinski, Maximilian, 59581 Warstein (DE)
(74) Representative: Westphal, Mussgnug Patentanwälte & Partner mbB

(56) References cited:
- EP-A1- 2 858 221
- DE-A1-102016 207 254
- US-A1- 2014 009 096

## Description

### TECHNICAL FIELD

The instant disclosure relates to a power inverter circuit arrangement, in particular a short-circuit-proof power inverter circuit arrangement.

### BACKGROUND

Motor applications or photovoltaic applications, for example, use power inverters for converting a direct current into an alternating current. Power inverters usually include a half-bridge, an H-bridge, or a so-called sixpack module (e.g., three phase power inverter). Such power inverter circuit arrangements should be short-circuit-proof to prevent the components of the circuit arrangement from being damaged if a fault condition arises. However, if, for example, fast switching transistors and/or diodes are used within the power inverter circuit arrangement, the costs for the overall circuit arrangement may be very high if the fast switching transistors are additionally short-circuit proof, as fast switching short-circuit-proof transistors are usually rather expensive.

Document US 2014/009096 A1 discloses a power conversion device in which destruction of a switching element can be avoided by preventing an excessive current from flowing into the switching element of a main circuit when, for example, a power supply for the power conversion device is interrupted. The power conversion device including a first switch unit in which a plurality of switching elements are series-connected is characterized by including, in the plurality of switching elements, at least one or more switching elements whose gate voltage thresholds are no more than a predetermined value and at least one or more switching elements whose gate voltage thresholds are more than the predetermined value.

Document DE 10 2016 207254 A1 discloses an inverter for an electric machine, with the following features: an intermediate circuit capacitor and / or a power source, a bridge circuit with at least one controllable, self-conducting passage switch, at least one power line, the intermediate circuit capacitor or the power source having a supply current terminal that connects an electric pole of the bridge circuit electrically, at least one controllable, normally-off switch in the at least one power line which is arranged in an open switching state current flow between the intermediate circuit capacitor and the power source and the bridge circuit to interrupt.

Document EP 2 858 221 A1 discloses a circuit with short circuit protection comprising two or more series connections of normally-on switches, each series connection comprising a high-side and a low-side normally-on switch, wherein the source electrodes of the low-side normally-on switches being connected to a same potential, and gate drivers for controlling the normally-on switches. The circuit further comprises a diode for each of the low-side normally-on switch, the anodes of the diodes being connected to the gate electrodes of the respective low-side normally-on switches and the cathodes of the diodes are connected to a common point, and a controllable semiconductor switch connected between the potential of source electrodes of the low-side normally-on switches and the common point to which the cathodes of the diodes are connected.

There is a need for a short-circuit-proof circuit arrangement which may be provided at reduced costs as compared to known circuit arrangements.

### SUMMARY

A power inverter circuit arrangement comprises a half-bridge arrangement comprising at least one half-bridge, wherein two or more half-bridges within the half-bridge arrangement are coupled parallel to each other. The circuit arrangement further comprises at least one protective switching device coupled in series to the half-bridge arrangement. The series connection comprising the half-bridge arrangement and the at least one protective switching device is coupled between a first supply node configured to be operatively coupled to a first electrical potential and a second supply node configured to be operatively coupled to a second electrical potential. Each half-bridge of the half-bridge arrangement comprises two switches, each of the switches of the half-bridge arrangement has a specific nominal current, and the protective switching device is configured to, during normal operation of the circuit arrangement, conduct a current which is four times the specific nominal current. The protective switching device comprises a fast desaturating semiconductor element. The dependent claims define various embodiments.

The invention may be better understood with reference to the following drawings and the description. The components in the figures are not necessarily to scale, emphasis instead being placed upon illustrating the principles of the invention. Moreover, in the figures, like reference numerals designate corresponding parts throughout the different views.

### BRIEF DESCRIPTION OF THE DRAWINGS

Figure 1 schematically illustrates a three-phase power inverter with short-circuit-proof transistors.
Figure 2 schematically illustrates a first example of a circuit arrangement.
Figure 3 schematically illustrates a further example of a circuit arrangement.
Figure 4 schematically illustrates a further example of a circuit arrangement.
Figure 5 schematically illustrates a further example of a circuit arrangement.

### DETAILED DESCRIPTION

In the following detailed description, reference is made to the accompanying drawings. The drawings show specific examples in which the invention may be practiced. It is to be understood that the features and principles described with respect to the various examples may be combined with each other, unless specifically noted otherwise. In the description as well as in the claims, designations of certain elements as "first element", "second element", "third element" etc. are not to be understood as enumerative. Instead, such designations serve solely to address different "elements". That is, e.g., the existence of a "third element" does not require the existence of a "first element" and a "second element".

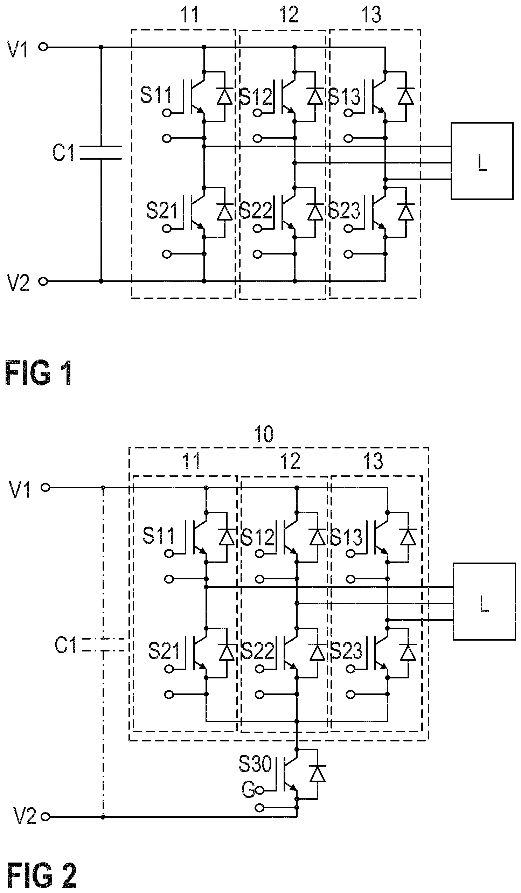

Referring to Figure 1, a three-phase power inverter is exemplarily illustrated in a circuit diagram. The three-phase power inverter is configured to convert a DC voltage provided at an input V1, V2 of the power converter into an AC voltage provided to a load L at an output of the power converter. The three-phase power inverter includes three half-bridges 11, 12, 13 that are coupled parallel to each other between a first supply node V1 which is configured to be operatively coupled to a first electrical potential and a second supply node V2 which is configured to be coupled to a second electrical potential. The first electrical potential may be a positive potential and the second electrical potential may be a negative potential to supply a DC voltage via the first and second supply nodes V1, V2. The first and second supply nodes V1, V2 form the input of the power inverter. A capacitor C1 may be coupled in parallel to the half-bridges 11, 12, 13 between the first supply node V1 and the second supply node V2.

Each half-bridge 11, 12, 13 may include one high-side switch S11, S12, S13 and one low-side switch S21, S22, S23 coupled in series to each other between the first supply node V1 and the second supply node V2. The power inverter circuit arrangement is configured to drive a load L at the output of the power inverter. The load L may be a three-phase motor, for example. This, however, is only an example. Generally speaking, the load L may be any inductive load. The load L may be electrically connected to a common node between a first high-side switch S11 and a first low-side switch S21, to a common node between a second high-side switch S12 and a second low-side switch S22, and to a common node between a third high-side switch S13 and a third low-side switch S23.

In the circuit arrangement of Figure 1, each switch S11, S12, S13, S21, S22, S23 of the three-phase power inverter is implemented as an IGBT (insulated-gate bipolar transistor). This, however, is only an example. The switches S11, S12, S13, S21, S22, S23 may also be implemented as MOSFETs (Metal Oxide Semiconductor Field-Effect Transistor), JFETs (Junction Field Effect Transistor), HEMTs (High Electron Mobility Transistor), BJTs (Bipolar Junction Transistor), or any other kind of transistor, for example. Each of the switches S11, S12, S13, S21, S22, S23 may comprise an internal or external freewheeling diode. The capacitor C1 may be a dc-link capacitor that is configured to store energy such that a constant DC voltage can be provided to the power inverter even if high current peaks are generated by the load L.

If a short circuit occurs in the power inverter circuit arrangement, the switches S11, S12, S13, S21, S22, S23 may be damaged. Therefore, in conventional power inverters, often short circuit proof semiconductor elements are used to implement the switches S11, S12, S13, S21, S22, S23. Short circuit proof in this context means that the semiconductor elements forming the switches S11, S12, S13, S21, S22, S23 may be subjected to short circuits at least under certain conditions and at least for a certain amount of time. If a short circuit is detected, the switches S11, S12, S13, S21, S22, S23 may be switched off such that they do not conduct any current anymore to protect them from damages.

In many applications today, fast switching transistors and diodes, such as SiC or GaN transistors and diodes, for example, are used to implement the switches S11, S12, S13, S21, S22, S23 to allow for a fast switching of the power inverter. However, fast switching semiconductor elements that are, in addition, short circuit proof are usually comparatively expensive. Therefore, implementing each individual switch S11, S12, S13, S21, S22, S23 of a power inverter as a short circuit proof fast switching element may be very costly.

Referring to Figure 2, a power inverter circuit arrangement is exemplarily illustrated. The power inverter circuit arrangement comprises a half-bridge arrangement 10. The half-bridge arrangement 10 comprises at least one half-bridge 11, 12, 13, wherein two or more half-bridges 11, 12, 13 within the half-bridge arrangement 10 are coupled parallel to each other. In the example illustrated in Figure 2, the half-bridge arrangement 10 comprises three half-bridges 11, 12, 13 coupled in parallel to each other. This, however, is only an example. The half-bridge arrangement 10 may only two half-bridges instead. The half-bridge arrangement 10 of Figure 2 essentially corresponds to the power inverter as has been explained by means of Figure 1 above.

The switches S11, S12, S13, S21, S22, S23 of the half-bridge arrangement 10 may be fast-switching elements. This means that the switches S11, S12, S13, S21, S22, S23 allow for a fast transition between an on-state and an off-state of the switch S11, S12, S13, S21, S22, S23. The switching frequency of the switches generally determines the quality of the output voltage and current delivered to the load L. The individual switches S11, S12, S13, S21, S22, S23, however, do not need to be short circuit proof in the arrangement of Figure 2. A short circuit proof switch, or a short circuit proof transistor, respectively, is a switch that has a high short circuit resistance. The short circuit resistance is usually expressed as the time between the occurrence of a short circuit to the destruction of the device. A short circuit proof switch may be switched off, when a short circuit is detected. Usually, there is a delay between the detection of the short circuit and switching off the switch. A short circuit proof switch can withstand the short circuit while still being switched on. The longer the switch can withstand a short circuit, the more expensive the switch.

In order to protect the switches S11, S12, S13, S21, S22, S23 of the half-bridge arrangement 10 from a short circuit, the power inverter circuit arrangement of Figure 2 includes an additional protective switching device S30 which prevents the switches S11, S12, S13, S21, S22, S23 from being damaged during a short circuit condition. The protective switching device S30 is coupled in series to the half-bridge arrangement 10. The half-bridge arrangement 10 and the protective switching device S30, therefore, form a series connection that is coupled between the first supply node V1 and the second supply node V2. A capacitor C1 may be coupled between the first supply node V1 and the second supply node V2 and in parallel to this series connection including the half-bridge arrangement 10 and the protective switching device S30. The protective switching device S30 is a short circuit proof switching element. This means that the protective switching device S30 can withstand a short circuit for at least a minimum time. The protective switching device may withstand a short circuit condition for a longer time than each of the individual switches S11, S12, S13, S21, S22, S23. Further, the protective switching device S30 may switch off when a short circuit occurs. By switching off the protective switching device S30, the switches S11, S12, S13, S21, S22, S23 of the half-bridge arrangement 10 may be reliably protected against short circuits.

In the example illustrated in Figure 2, the protective switching device S30 includes an IGBT. The IGBT includes an internal or external antiparallel diode. The protective switching device S30 may be configured to conduct a current in two current directions in its load circuit, this is, in a first direction from the second supply node V2 and the capacitor C1 to the low-side switches S21, S22, S23, and in a second direction from the low-side switches S21, S22, S23 to the second supply node V2 and the capacitor C1. When a short circuit is detected, the protective switching device S30 may be switched off such that the current flow in the first direction is prevented. However, the protective switching device S30 may still conduct a current in the second direction while switched off to allow feedback processes, e.g., a demagnetization of the inductive load L, after failure.

The protective switching device S30 comprises fast desaturating semiconductor element. This means that the protective switching device S30 desaturates comparatively fast. The protective switching device S30 may switch off when it is completely desaturated. It is, however, also possible to actively switch off the protective switching device S30. In order to actively switch off the protective switching device S30, an appropriate switching signal may be provided at a gate terminal G of the protective switching device S30. Switching off the protective switching device S30 and thereby preventing a current flow in the first direction during a fault condition prevents an unwanted discharge of the capacitor C1. The protective switching device S30 may be a semiconductor device including a material with a comparatively high bandgap (wide-bandgap semiconductor). For example, the protective switching device S30 may include a semiconductor material such as SiC or GaN, for example. Wide-bandgap semiconductors are semiconductor materials which have a relatively large bandgap as compared to typical semiconductors. Typical semiconductors like Si, for example, have a bandgap in the range of 1 - 1.5 electronvolt (eV), whereas wide-bandgap materials have bandgaps in the range of 2 - 4 eV.

During normal operation, when the load L is switched on and a voltage is provided at the input V1, V2 of the power inverter arrangement, the capacitor C1 is charged. During the operation of the load L, the capacitor C1 may compensate for fluctuations of the input voltage. When a fault condition occurs, a discharge of the capacitor C1 may not be desired.

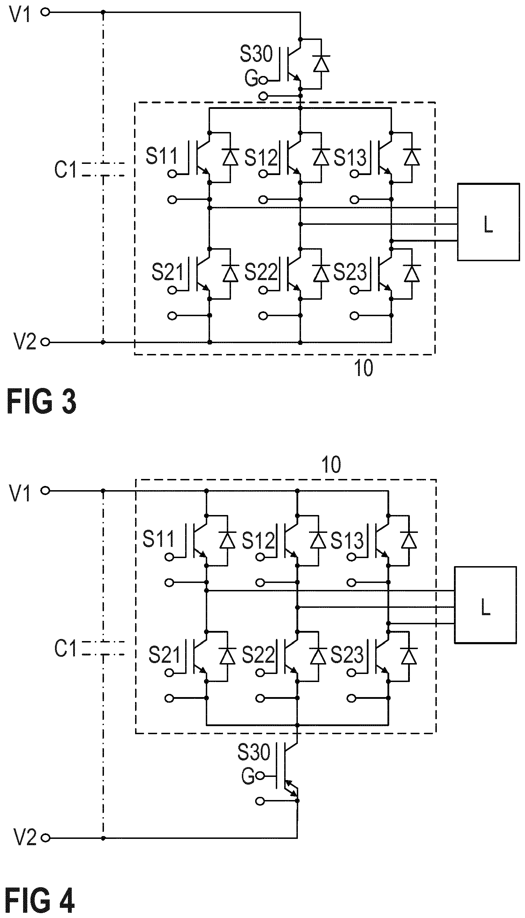

In the example illustrated in Figure 2, the protective switching device S30 is coupled between the half-bridge arrangement 10 and the second supply node V2. In the given example, this is a branch connected to a negative potential. This, however, is only an example. It is also possible to arrange the protective switching device S30 between the half-bridge arrangement 10 and the first supply node V1 instead (branch connected to a positive potential) as is exemplarily illustrated in Figure 3. According to a further example (not illustrated), the power inverter circuit arrangement includes two protective switching devices S30. A first protective switching device may be coupled between the half-bridge arrangement 10 and the first supply node V1, and a second protective switching device may be coupled between the half-bridge arrangement 10 and the second supply node V2. Therefore, the series connection of this further example includes the first protective switching device, the half-bridge arrangement 10 and the second protective switching device, with the series connection being coupled between the first supply node V1 and the second supply node V2.

Instead of a conventional IGBT with an antiparallel diode, as illustrated in the examples of Figures 2 and 3, the protective switching device S30 may comprise a RC-IGBT (reverse-conducting insulated gate bipolar transistor) as is exemplarily illustrated in Figure 4. A RC-IGBT combines the transistor functionality with a freewheeling functionality. A RC-IGBT may conduct current in both current directions. The general principle of the protective switching device S30 in Figure 4 is the same as has been described above with reference to Figures 2 and 3. The RC-IGBT may only be switched off when a fault condition (e.g., short circuit) has been detected. The RC-IGBT may switch off when it is completely desaturated. It is, however, also possible to actively switch off the RC-IGBT. In order to actively switch off the RC-IGBT, an appropriate switching signal may be provided at a gate terminal G of the RC-IGBT. Switching off the RC-IGBT and thereby preventing a current flow in the first direction during a fault condition prevents an unwanted discharge of the capacitor C1.

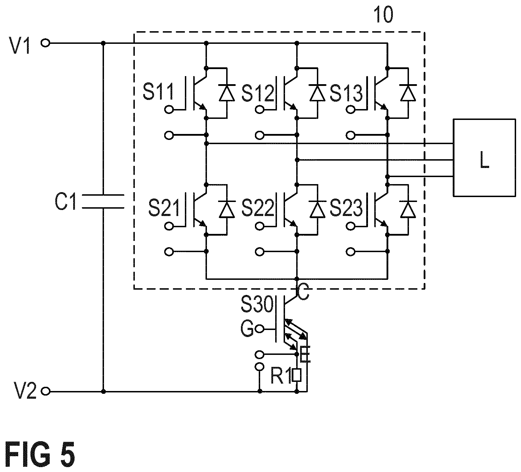

A fault condition may be detected in several different ways. For example, a complete desaturation of the protective switching device S30 generally indicates a fault condition. One possibility, therefore, is to detect a desaturation of the protective switching device S30. Another possibility is to use a current sense semiconductor device such as a current sense IGBT, as is exemplarily illustrated in Figure 5. A current sense IGBT usually is a device which includes a current sensor. Such a current sensor may be implemented in different ways. For example, the current sensor may include a sense resistor R1 coupled in series to an emitter terminal E of the IGBT. The sense resistor R1 may include a simple PTC (Positive Temperature Coefficient) or NTC (Negative Temperature Coefficient) device, for example. Current sense IGBTs are commonly known and will therefore not be explained in further detail. However, using a current sense IGBT with an integrated current sense functionality is only an example. A current sense functionality could also be implemented external to the protective switching device S30 in any suitable way.

During normal operation, the protective switching device S30 may be configured to not desaturate. The protective switching device is configured to conduct a current which is a multiple of a nominal current of a switch S11, S12, S13, S21, S22, S23 of the half-bridge arrangement 10. There is a specific nominal current. Each of the switches S11, S12, S13, S21, S22, S23 of the half-bridge arrangement 10 has the specific nominal current. For example, the switches S11, S12, S13, S21, S22, S23 may be identical. The protective switching device S30 is configured to conduct a current which is four times the nominal current of the individual switches S11, S12, S13, S21, S22, S23. For example, the protective switching device S30 may produce essentially no static losses up to a current which equals four times the nominal current of the individual switches S11, S12, S13, S21, S22, S23. During normal operation, the protective switching device S30 may not desaturate. During a fault condition, each of the switches S11, S12, S13, S21, S22, S23 may be configured to momentarily conduct a current which equals a multiple (e.g., four times) of its own nominal current without suffering any damage. When a fault condition occurs, the protective switching device S30 desaturates faster than each of the individual switches S11, S12, S13, S21, S22, S23.

Referring to the example illustrated in Figure 5, wherein the protective switching device S30 includes a current sense IGBT, the current sense IGBT may include a conventional IGBT with an antiparallel diode or a RC-IGBT. When using a conventional IGBT with an antiparallel diode, a current in the first direction (main direction of current flow from second supply node V2/capacitor C1 to switches S21, S22, S23) may be measured. When using a RC-IGBT, a current may be measured both in the first direction as well as in the second direction (from switches S21, S22, S23 to second supply node V2/capacitor C1). Therefore, when using a RC-IGBT, the current sense functionality may be used for sensing a fault condition as well as for other functions such as a superordinate control of the inverter arrangement during normal operation, for example.

Using a protective switching device S30 in a power inverter arrangement including a half-bridge arrangement 10 with three half-bridges 11, 12, 13 may provide an economic advantage over an arrangement without the protective switching device S30 wherein the switches S11, S12, S13, S21, S22, S23 are each designed as short-circuit proof devices. If the half-bridge arrangement 10 includes only two half-bridges (H-bridge arrangement), using a protective switching device S30 may still provide an economic advantage. In such a case, four switches, e.g. switches S11, S21 of a first half-bridge 11 and switches S12, S22 of a second half-bridge 12, may be implemented as conventional, non-short circuit proof devices. Therefore, the costs for the half-bridge arrangement 10 are reduced as compared to a half-bridge arrangement 10 including four short-circuit proof switches S11, S21, S12, S22. However, the costs for a protective switching device S30 need to be added to the overall solution.

If the half-bridge arrangement 10 only includes one half-bridge, providing a protective switching device S30 may still be economically advantageous in some cases.

## Claims

1. A power inverter circuit arrangement comprises:
a half-bridge arrangement (10) comprising at least one half-bridge (11, 12, 13), wherein two or more half-bridges (11, 12, 13) within the half-bridge arrangement (10) are coupled parallel to each other; and
at least one protective switching device (S30) coupled in series to the half-bridge arrangement (10), wherein
the series connection comprising the half-bridge arrangement (10) and the at least one protective switching device (S30) is coupled between a first supply node (V1) configured to be operatively coupled to a first electrical potential and a second supply node (V2) configured to be operatively coupled to a second electrical potential; and
each half-bridge (11, 12, 13) of the half-bridge arrangement (10) comprises two switches (S11, S12, S13, S21, S22, S23),
the power inverter circuit arrangement being **characterized in that**
each of the switches (S11, S12, S13, S21, S22, S23) of the half-bridge arrangement (10) has a specific nominal current;
the protective switching device (S30) is configured to, during normal operation of the circuit arrangement, conduct a current which is four times the specific nominal current; and
the protective switching device (S30) comprises a fast desaturating semiconductor element.

2. The circuit arrangement of claim 1, further comprising a DC-link capacitor (C1) coupled between the first supply node (V1) and the second supply node (V2) and in parallel to the series connection comprising the half-bridge arrangement (10) and the at least one protective switching device (S30).

3. The circuit arrangement of claim 1 or 2, wherein the first potential is a positive potential and the second potential is a negative potential, and wherein one protective switching device (S30) is coupled between the half-bridge arrangement (10) and the second supply node (V2).

4. The circuit arrangement of any of claims 1 to 3, wherein the first potential is a positive potential and the second potential is a negative potential, and wherein one protective switching device (S30) is coupled between the half-bridge arrangement (10) and the first supply node (V1).

5. The circuit arrangement of any of the preceding claims, wherein each of the at least one protective switching devices (S30) includes an IGBT with an antiparallel diode.

6. The circuit arrangement of any claims 1 to 4, wherein each of the at least one protective switching devices (S30) includes a RC-IGBT.

7. The circuit arrangement of any of the preceding claims, wherein each of the protective switching devices (S30) includes a current sensor that is configured to detect a current flowing in the protective switching device (S30).

8. The circuit arrangement of claim 7, wherein the current sensor comprises a sense resistor (R1) that is coupled in series to an emitter terminal (E) of the protective switching device (S30).

9. The circuit arrangement of any of the preceding claims, wherein the protective switching device (S30) comprises a wide-bandgap semiconductor material.

10. The circuit arrangement of claim 9, wherein the protective switching device (S30) comprises SiC or GaN.

11. The circuit arrangement of any of the preceding claims, wherein, during a fault condition, each of the switches (S11, S12, S13, S21, S22, S23) is configured to momentarily conduct a current which equals a multiple of its own nominal current without suffering any damage.

12. The circuit arrangement of any of the preceding claims, wherein the protective switching device (S30) is configured to
switch off during a fault condition of the circuit arrangement;
during normal operation of the circuit arrangement, conduct a current in a first direction to the half-bridge arrangement (10) and in a second direction from the half-bridge arrangement (10);
during a fault condition of the circuit arrangement, disable a current flow in the first direction and conduct a current in the second direction.

## Patentansprüche

1. Wechselrichter-Schaltungsanordnung, Folgendes umfassend:
eine Halbbrückenanordnung (10), die mindestens eine Halbbrücke (11, 12, 13) umfasst, wobei zwei oder mehr Halbbrücken (11, 12, 13) innerhalb der Halbbrückenanordnung (10) parallel zueinander gekoppelt sind; und
mindestens ein Schutzschaltgerät (S30) in Reihe zu der Halbbrückenanordnung (10) gekoppelt ist, wobei
die Reihenschaltung, welche die Halbbrückenanordnung (10) und das mindestens eine Schutzschaltgerät (S30) umfasst, zwischen einem ersten Versorgungsknoten (V1), der dazu ausgelegt ist, mit einem ersten elektrischen Potential wirkverbunden zu sein, und einem zweiten Versorgungsknoten (V2), der dazu ausgelegt ist, mit einem zweiten elektrischen Potential wirkverbunden zu sein, gekoppelt ist; und
jede Halbbrücke (11, 12, 13) der Halbbrückenanordnung (10) zwei Schalter (S11, S12, S13, S21, S22, S23) umfasst,
wobei die Wechselrichter-Schaltungsanordnung **dadurch gekennzeichnet ist, dass**:
jeder der Schalter (S11, S12, S13, S21, S22, S23) der Halbbrückenanordnung (10) einen spezifischen Nennstrom hat;
das Schutzschaltgerät (S30) dazu ausgelegt ist, während des normalen Betriebs der Schaltungsanordnung einen Strom zu leiten, der das Vierfache des spezifischen Nennstroms beträgt; und
das Schutzschaltgerät (S30) ein schnell entsättigendes Halbleiterelement umfasst.

2. Schaltungsanordnung nach Anspruch 1, ferner einen Zwischenkreiskondensator (Cl) umfassend, der zwischen dem ersten Versorgungsknoten (V1) und dem zweiten Versorgungsknoten (V2) und parallel zu der Reihenschaltung gekoppelt ist, welche die Halbbrückenanordnung (10) und das mindestens eine Schutzschaltgerät (S30) umfasst.

3. Schaltungsanordnung nach Anspruch 1 oder 2, wobei das erste Potential ein positives Potential, und das zweite Potential ein negatives Potential ist, und wobei ein Schutzschaltgerät (S30) zwischen der Halbbrückenanordnung (10) und dem zweiten Versorgungsknoten (V2) gekoppelt ist.

4. Schaltungsanordnung nach einem der Ansprüche 1 bis 3, wobei das erste Potential ein positives Potential und das zweite Potential ein negatives Potential ist, und wobei ein Schutzschaltgerät (S30) zwischen der Halbbrückenanordnung (10) und dem ersten Versorgungsknoten (V1) gekoppelt ist.

5. Schaltungsanordnung nach einem beliebigen der vorhergehenden Ansprüche, wobei jedes der mindestens einen Schutzschaltgeräte (S30) einen IGBT mit einer Antiparalleldiode aufweist.

6. Schaltungsanordnung nach einem der Ansprüche 1 bis 4, wobei jedes der mindestens einen Schutzschaltgeräte (S30) einen RC-IGBT aufweist.

7. Schaltungsanordnung nach einem beliebigen der vorhergehenden Ansprüche, wobei jedes der Schutzschaltgeräte (S30) einen Stromsensor aufweist, der dazu ausgelegt ist, einen in dem Schutzschaltgerät (S30) fließenden Strom zu erkennen.

8. Schaltungsanordnung nach Anspruch 7, wobei der Stromsensor einen Abtastwiderstand (R1) umfasst, der in Reihe mit einem Emitteranschluss (E) des Schutzschaltgerätes (S30) gekoppelt ist.

9. Schaltungsanordnung nach einem beliebigen der vorhergehenden Ansprüche, wobei das Schutzschaltgerät (S30) ein Halbleitermaterial mit breiter Bandlücke umfasst.

10. Schaltungsanordnung nach Anspruch 9, wobei das Schutzschaltgerät (S30) SiC oder GaN aufweist.

11. Schaltungsanordnung nach einem beliebigen der vorhergehenden Ansprüche, wobei, während eines Fehlerzustands, jeder der Schalter (Sll, S12, S13, S21, S22, S23) dazu ausgelegt ist, kurzzeitig einen Strom zu leiten, der einem Vielfachen seines eigenen Nennstroms entspricht, ohne jeglichen Schaden zu erleiden.

12. Schaltungsanordnung nach einem beliebigen der vorhergehenden Ansprüche, wobei das Schutzschaltgerät (S30) dazu ausgelegt ist:
sich während eines Fehlerzustands der Schaltungsanordnung auszuschalten;
während des normalen Betriebs der Schaltungsanordnung einen Strom in einer ersten Richtung zu der Halbbrückenanordnung (10), und in einer zweiten Richtung von der Halbbrückenanordnung (10) zu leiten;
während eines Fehlerzustands der Schaltungsanordnung einen Stromfluss in der ersten Richtung zu deaktivieren, und einen Strom in der zweiten Richtung zu leiten.

## Revendications

1. Montage d'onduleur de puissance comprenant :
un montage (10) en demi-pont comprenant au moins un demi-pont (11, 12, 13), deux ou plusieurs demi-ponts (11, 12, 13) dans le montage (10) en demi-pont étant montés en parallèle entre eux ; et
au moins un dispositif (S30) d'interruption protecteur, monté en série avec le montage (10) en demi-pont, dans lequel
le montage série, comprenant le montage (10) en demi-pont et le au moins un dispositif (S30) interrupteur de protection, est monté entre un premier nœud (V1) d'alimentation configuré pour être connecté fonctionnellement à un premier potentiel électrique et un deuxième nœud (V2) d'alimentation configuré pour être connecté fonctionnellement à un deuxième potentiel électrique ; et
chaque demi-pont (11, 12, 13) du montage (10) en demi-pont comprend deux interrupteurs (Sll, S12, S13, S21, S22, S23),
le montage d'onduleur de puissance étant **caractérisé en ce que** chacun des interrupteurs (S11, S12, S13, S21, S22, S23) du montage (10) en demi-pont a un courant nominal spécifique ;
le dispositif (S30) interrupteur de protection est configuré pour, pendant un fonctionnement normal du montage, conduire un courant qui représente 4 fois le courant nominal spécifique ; et
le dispositif (S30) interrupteur de protection comprend un élément semi-conducteur à désaturation rapide.

2. Montage suivant la revendication 1, comprenant en outre un condensateur (Cl) de liaison à courant continu, monté entre le premier nœud (V1 d'alimentation et le deuxième nœud (V2) d'alimentation et, en parallèle au montage série, comprenant le montage (10) en demi-pont et le au moins un dispositif (S30) d'interruption protecteur.

3. Montage suivant la revendication 1 ou 2, dans lequel le premier potentiel est un potentiel positif et le deuxième potentiel est un potentiel négatif et dans lequel un dispositif (S30) d'interruption protecteur est monté entre le montage (10) en demi-pont et le deuxième nœud (V2) d'alimentation.

4. Montage suivant l'une quelconque des revendications 1 à 3, dans lequel le premier potentiel est un potentiel positif et le deuxième potentiel est un potentiel négatif et dans lequel un dispositif (S30) d'interruption protecteur est monté entre le montage (10) en demi-pont et le premier nœud (V1) d'alimentation.

5. Montage suivant l'une quelconque des revendications précédentes, dans lequel chacun des au moins un dispositif (S30) d'interruption protecteur a un IGBT avec une diode montée tête-bèche.

6. Montage suivant l'une quelconque des revendications 1 à 4, dans lequel chacun des au moins un dispositif (S30) d'interruption protecteur a un RC-IGBT.

7. Montage suivant l'une quelconque des revendications précédentes, dans lequel chacun des dispositifs (S30) d'interruption protecteur a un détecteur de courant, qui est configuré pour détecter un courant passant dans le dispositif (S30) d'interruption protecteur.

8. Montage suivant la revendications 7, dans lequel le détecteur de courant comprend une résistance (R1) de détection, qui est montée en série avec une borne (E) d'émetteur du dispositif (S30) d'interruption protecteur.

9. Montage suivant l'une quelconque des revendications précédentes, dans lequel le dispositif (S30) d'interruption protecteur comprend un matériau semi-conducteur à grande bande interdite.

10. Montage suivant la revendication 9, dans lequel le dispositif (S30) d'interruption protecteur comprend du SiC ou du GaN.

11. Montage suivant l'une quelconque des revendications précédentes, dans lequel, pendant un état de défaut, chacun des interrupteurs (S11, S12, S13, S21, S22, S23) est configuré pour conduire momentanément un courant, qui est égal à un multiple de son propre courant nominal, sans souffrir de quelque dommage que ce soit.

12. Montage suivant l'une quelconque des revendications précédentes, dans lequel le dispositif (S30) d'interrupteur protecteur est configuré
pour s'ouvrir pendant un état de défaut du montage ;
pour, pendant un fonctionnement normal du montage, conduire un courant, dans un premier sens vers le montage (10) en demi-pont et, dans un deuxième sens à partir du montage (10) en demi-pont ;
pendant un état de défaut du montage, ne pas laisser passer un courant dans le premier sens et conduire un courant dans le deuxième sens.
